# EUROPEAN PATENT APPLICATION

(11) **EP 4 775 477 A1**
(43) Date of publication of application: **15.07.2026**
(21) Application number: 24862152.6
(22) Date of filing: 30.08.2024
(51) Int. Cl.: B62D 33/02

(54) **STRAPPING FOR THE STABILISATION OF PILLARS OF TRUCK CARGO BOXES**

(30) Priority: 06.09.2023 ES 202331574 U
(71) Applicant: Mecadetol, S.A., 31119 Imarcoain (Navarra) (ES)
(72) Inventor: ARRIOLA BONETA, Fernando, 31119 IMARCOAIN (NAVARRA) (ES)
(74) Representative: Cabinet Beau de Loménie
(86) International application number: PCT/ES2024/070526
(87) International publication number: WO 2025/052012

(57) **Abstract**

The invention relates to strapping (1) for the stabilisation of pillars (4) of tarpaulin cargo boxes (2) of trucks, wherein the bottom of the pillar (4) is attached to the frame of the cargo box (2) and the top of the pillar is attached to a triple rail (3) of a cargo box (2) with a runner (31) into which a T-shaped carriage (44) slidingly fits, the carriage (44) being joined to the upper part of the pillar (4) by being inserted into a slot (451) in a plate (45) attached to the upper part of the pillar (4), wherein the strapping (1) is disposed between the triple rail (3) and the pillar (4), being supported on the plate (45) of the pillar (4), and comprises lateral damping means (13) on both sides of the pillar (4) that make contact with the bottom surface of the triple rail (3) to dampen any possible rocking of the pillar (4).

## Description

### Technical field

The present invention relates to the field of cargo transport, specifically to the parts that make up the cargo box of a truck in which the material to be transported is transported and secured.

### State of the art

To transport cargo, a truck couples to different types of trailers to transport the material. Tarpaulin trailers are the most common trailers for transporting general merchandise. These trailers have a rectangular, box-like, skeletal structure that allows the cargo to be introduced through the rear door, from above and from the side, the latter being much more comfortable as it has a larger operating area and allows for quick loading and unloading.

This cargo box consists of a floor, a forward front part, a rear door and upper profiles called triple rails which join the front part and the rear at the top. These profiles have three rails, hence the name, which enable the roof to be moved and folded along the upper rail, the side tarpaulin to be moved along the outer rail, which covers the entire trailer, and the pillars to be moved along the intermediate rail.

The side pillars of the cargo boxes in a trailer have the function of making the whole box rigid, ensuring its stability. On the other hand, they support the longitudinal profiles or boards that secure the cargo and keep the upper triple rail that supports the roof and the tarpaulin taut. These pillars are already known in the state of the art and although there are different types depending on whether the trailer roof can be lifted or not, they all have a similar structure.

The pillar is made up of a clamp, an extension element or a slider that slides along the inside of the clamp, allowing the variable height to be adjusted. A plate is coupled to the top of the pillar slider, and on said plate a carriage is attached with four bearings that allow it to slide along the triple rail so that it can be moved along the entire length of the cargo box and be attached in the desired position. This attachment is made to the frame by means of a lever-like lock on the bottom of the pillar. There are also side hooks along the clamp to couple boards or profiles that are placed transversally, being fastened at their ends between one pillar and another, allowing the cargo to be secured correctly.

To better understand the structure and operation of these pillars, document ES1014848_U is mentioned, which discloses a sliding pillar for a truck box with a removable roof designed to be able to move to the right and left when required, being able to return to its original position when the truck has been loaded.

Due to the carriage bearings at the top of the pillars, said pillars move laterally along the rail causing some destabilisation. This slight sway is caused by any movement of the vehicle, whether in motion or at rest on uneven or sloping ground. This "rocking" tends to affect the driver's ability to gain control of the truck to some extent, and with each braking or acceleration it generates a kind of annoying knocking noise that can lead to exhaustion during the transport journey.

On the other hand, when the trailer is at rest, this movement of the carriage causes the pillar to have a certain inclination, as it is attached to the bottom. This inclination means that the distance between one pillar and another is not equal at all points of the pillar, which means that at some point this distance will be greater, causing the profiles to lose their support and when the tarpaulin is removed for unloading, some may fall, causing an accident with significant physical damage to the operator.

To solve this problem and stabilise the pillars, the object of the present invention proposes the incorporation of a strapping that is placed at the junction of the carriage with the pillar, which in turn makes contact with the rail, eliminating this rocking movement of the pillar.

### Object of the invention

In order to meet this objective and solve the technical problems discussed so far, as well as to provide additional advantages that can be derived later on, the present invention relates to a strapping for the stabilisation of pillars of tarpaulin cargo boxes of trucks, wherein the bottom of the pillar is attached to the frame of the cargo box and the top of the pillar is attached to a triple rail of a cargo box with a runner into which a T-shaped carriage slidingly fits, the carriage being joined to the upper part of the pillar by inserting the bottom of the "T" into a slot in a plate attached to the upper part of the pillar, wherein the strapping is disposed between the triple rail and the pillar, being supported on the plate of the pillar and said strapping comprising lateral damping means on both sides of the pillar that make contact with the bottom surface of the triple rail to dampen any possible rocking of the pillar.

This strapping will have sufficient strength and flexibility to stabilise the pillar and eliminate rocking movements at the top of the pillar. It is important to note that eliminating these movements is necessary when the trailer is closed, i.e., when the pillars have already been hooked in, the profiles and cargo are in place, and the tarpaulin is properly attached.

For side loading and unloading, it is necessary to unhook the pillar and roll it to facilitate the exit or entry of the cargo. When unhooked from the bottom, the pillar is suspended from the triple rail causing said triple rail to bend somewhat due to the release of tension between the triple rail and the carriage of the pillar. This release of tension creates a clearance that allows the pillar to be rolled even with the strapping included.

When the pillar is placed by means of rolling into the desired position, it is necessary to raise it to secure the locking lever and when it is hooked in, the upper triple rail is tensioned and in this position the clearance between the triple rail and the pillar decreases. Nevertheless, the present invention proposes that this clearance disappears in order to eliminate the movements of the carriage along the triple rail that result in the rocking of the pillar, creating destabilisation in the cargo box and discomfort for the truck driver. The strapping as per the present invention is mounted between the triple rail and the pillar, eliminating this clearance and exerting a gripping force as a damper that eliminates lateral rocking.

Preferably, the strapping comprises a central support body on the plate of the pillar, in the form of a flat platen with a slot corresponding to the slot in the plate, for insertion of the carriage for subsequent attachment.

This configuration provides an element that can be easily manufactured from a folded plate. The configuration of the slot allows the strapping to be locked to prevent it from moving in lateral and transverse directions, lateral direction being understood as the longitudinal direction of the strapping, and transverse direction being understood as the direction perpendicular to said longitudinal direction of the strapping.

According to a feature of the invention, the lateral damping means are in the form of a platen spring, i.e., a spring made of a bent plate, with a first downward bend from the central body of the strapping and with a second upward bend thereafter, which together provide the spring function, and one end protruding from the median plane of the central body for contact with the triple rail.

This configuration makes it possible to manufacture, from a plate, a strapping with springlike qualities at the ends to dampen the possible rocking of the top of the pillar.

According to another feature of the invention, the end of the strapping protruding on either side of said strapping is curved.

This configuration makes it possible for the free end of the strapping to have a curvature on both sides, said curvature again being downwards, which allows better support of the bottom surface of the triple rail and therefore better damping.

### Description of the figures

To complement the description that is being made and in order to help make the features of the invention more readily understandable, a set of drawings is attached as an integral part of said description wherein, for illustrative and non-limiting purposes, the following has been represented:
Figure 1 shows a perspective view of the truck cargo box.
Figure 2 shows an exploded view of the pillar-strapping-triple rail assembly.
Figure 3 shows a perspective view of the pillar-strapping-triple rail assembly in a position of assembly, seen from the outside of the truck.
Figure 4 shows a perspective view as in figure 3 but from the inside of the truck.
Figure 5 shows a front view of the pillar-strapping-triple rail assembly from the inside.
Figure 6 shows a perspective view of the strapping as per the invention.
Figure 7 shows a front view of the strapping.
Figure 8 shows a top view of the strapping.

### Detailed description of the invention

In light of the aforementioned figures, and in accordance with the adopted numbering, one may observe therein a preferred exemplary embodiment of the invention, which comprises the parts and elements indicated and described in detail below.

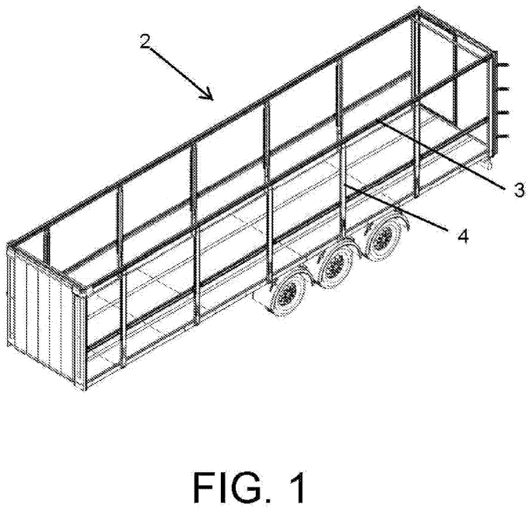

As can be seen in figure 1, the cargo box (2) of trailer or semi-trailer trucks with a tarpaulin enclosure comprises a plurality of pillars (4), the bottom of which is attached to the frame, and the top of which is joined to a triple rail (3) along which the tarpaulin that acts as an enclosure moves.

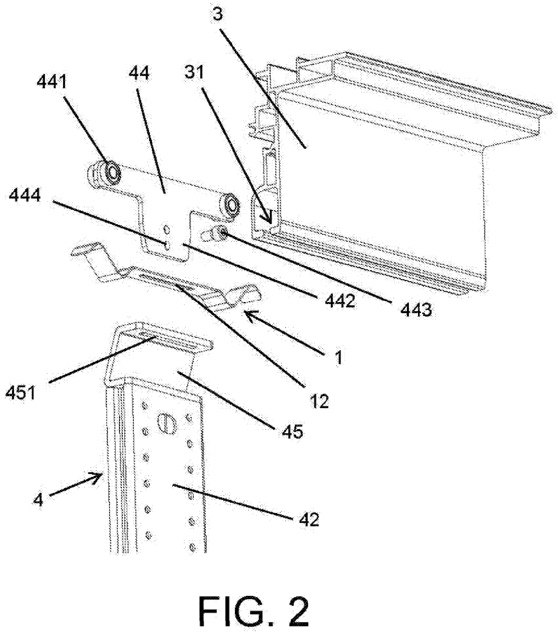

This pillar (4) preferably comprises a slider (42) for extending the pillar (4) when it is necessary to raise the roof of the cargo box (2). As can be seen in figure 2, at the end of said slider (42) the pillar (4) comprises a plate (45) with a slot (451). Thus, to join the triple rail (3) and the pillar (4), there is a T-shaped carriage (44) that slidingly fits into a runner (31) of the triple rail (3), sliding on it thanks to bearings (441) arranged on the wings of the "T" of the carriage (44). The lower extension of the "T" of said carriage (44) is in the form of a platen and during assembly it is inserted into the slot (451) in the plate (45) of the pillar (4), so that it is attached with a locking bolt (443) in a hole (444) in the carriage (44) to prevent it from coming out of said slot (451) in the plate (45). In this arrangement, the pillar (4) is secured by holding the triple rail (3) in place.

However, with this configuration, due to the clearance with vertical movement of the carriage (44) on the slot (451) in the plate (45), said vertical movement between the triple rail (3) and the pillar (4) added to the lateral movement of the carriage (44) on the runner (31) sometimes results in rocking of the pillar (4).

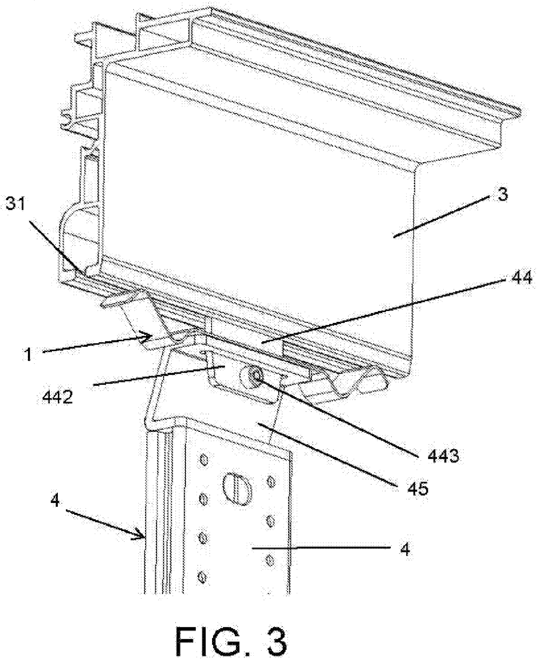

To avoid said rocking, as can be seen in figures 2 to 5 of the preferred embodiment of the invention, a damping strapping (1) is disposed between the triple rail (3) and the pillar (4) to eliminate the aforementioned clearance of vertical movement, but dampen the possible vertical movements, so that the undesired rocking of the top of the pillar (4) is minimised or completely eliminated.

This strapping (1) consists of an elongated, leaf spring-shaped laminar piece with a central body (11) having a flat surface and with lateral damping means (13) at each end of the strapping. In the central part of the central body (11), the strapping preferably comprises a slot (12) having a shape and dimensions equal to the slot (451) in the plate of the pillar (4), so that the strapping (4) rests with its central body (11) on the plate (45) making its slot (12) coincide with the slot (451) in the plate (45), and at that moment the bottom (442) of the carriage (44) fits into both slots (12, 451), blocking the exit of the carriage (44) by attaching the locking bolt (443) as usual. In this way, the strapping (1) is fitted between the pillar (4) and the triple rail (3) maintaining contact with both elements, so that the damping means (13) are arranged outside the pillar (4) and in contact with the bottom surface of the triple rail (3) to dampen the vertical movements and restrict the lateral movements of the top of the pillar (4).

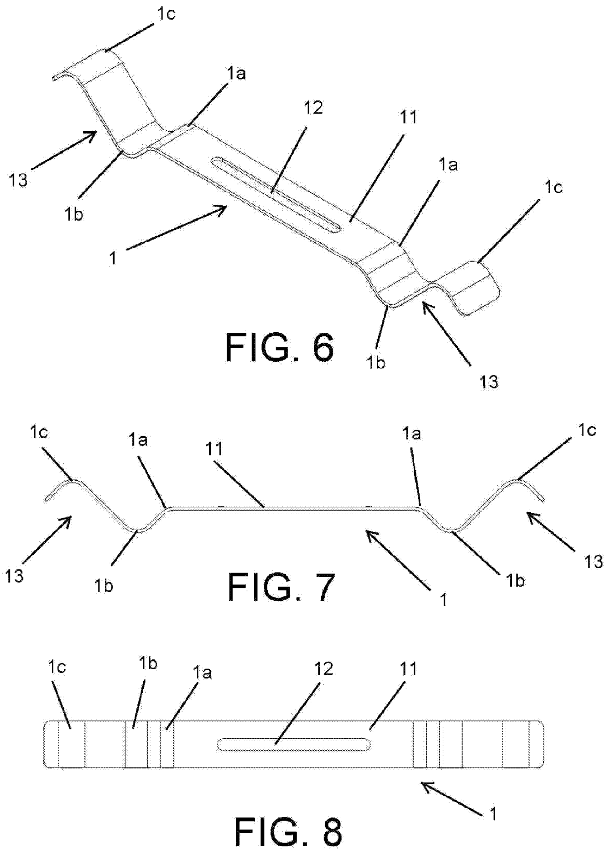

For this purpose, as can be seen in figures 6 to 8, the damping means (13) at the ends of the strapping (1) are preferably in the form of a first downward bend (1a), a second upward bend (1b) ending in an end protruding upwards from the median plane of the central body (11), said end being the one which makes contact with the bottom surface of the triple rail (3) in the operating position of assembly.

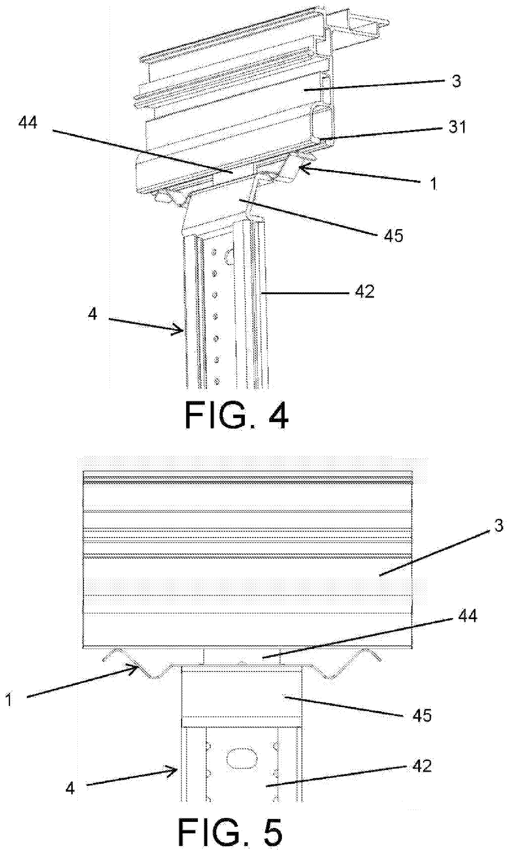

Thus, preferably, the end of the strapping (1) ends in a curve (1c) or support bend to prevent a profiled edge from rubbing against or jamming the carriage (44). In this way, the sum of the three bends (1a, 1b, 1c) form damping means (13) in the form of a platen spring, which, as can be seen in figure 5, provide a contact support with the bottom surface of the triple rail (3), acting as a damping stop to prevent the pillar from rocking. This strapping (1) will preferably be made of a folded plate made of material that provides sufficient strength to withstand bending, such as steel. The degree of damping will be calculated during the dimensioning of the strapping (1) to suit the dimensions of the pillar (4) to be damped, taking into account the thickness and angle and/or number of spring bends (1a, 1b, 1c).

## Claims

1. A strapping (1) for the stabilisation of pillars (4) of tarpaulin cargo boxes (2) of trucks, wherein the bottom of the pillar (4) is attached to the frame of the cargo box (2) and the top of the pillar is attached to a triple rail (3) of a cargo box (2) with a runner (31) into which a T-shaped carriage (44) slidingly fits, the carriage (44) being joined to the upper part of the pillar (4) by being inserted into a slot (451) in a plate (45) attached to the upper part of the pillar (4), wherein the strapping (1) is disposed between the triple rail (3) and the pillar (4), being supported on the plate (45) of the pillar (4), and comprises lateral damping means (13) on both sides of the pillar (4) that make contact with the bottom surface of the triple rail (3) to dampen any possible rocking of the pillar (4).

2. The strapping (1) according to claim 1, comprising a central part (11) for resting on the plate (45) of the pillar (4), in the form of a flat platen with a slot (12) corresponding to the slot (451) in the plate (45), for insertion of the carriage (44).

3. The strapping (1) according to claims 1 or 2, wherein the lateral damping means (13) are in the form of a platen spring with a first downward bend (1a) from the central part (11) and a second upward bend (1b) which establish the spring function, and one end (1c) protruding for contact with the triple rail (3).

4. The strapping (1) according to any of the preceding claims, wherein the end (1c) is curved.
